# EUROPÄISCHE PATENTANMELDUNG

(11) **EP 0 924 452 A2**
(43) Veröffentlichungstag der Anmeldung: **23.06.1999**
(21) Anmeldenummer: 98122645.9
(22) Anmeldetag: 28.11.1998
(51) Int. Cl.: F16K 41/04

(54) **Ventil mit geteilter Stopfbuchse**

(30) Priorität: 16.12.1997 DE 19755795
(71) Anmelder: MESSER GRIESHEIM GMBH, 60547 Frankfurt (DE)
(72) Erfinder: Pongraz, Johann, 47259 Duisburg (DE); Klebe, Ulrich, 47647 Kerken (DE)

(57) **Zusammenfassung**

Die Ventile sind mit geteilten, d. h. mehrteiligen Stopfbuchseneinsätzen (z. B. Stopfbuchsteile 2, 3) versehen, die leicht austauschbar sind. Die Stopfbuchseneinsätze mit der Stopfbuchspackung 4 sind so gestaltet, daß die Stopfbuchsteile 2, 3 eines Stopfbuchseneinsatzes bei dem Einbau in ein Ventil durch ein Befestigungsmittel 7 dichter zusammengedrückt werden können (Toleranzpassung). Aufgrund dieser Bauweise werden keine zusätzlichen Sicherungsmittel wie Sicherungsringe benötigt.

## Beschreibung

Die Erfindung betrifft ein Stopfbuchsventil.

Herkömmliche Stopfbuchsventile sind mit eine Stopfbuchse ausgestattet, die über eine Druckschraube die Stopfbuchse gegen die Ventilspindel anpreßt. Eine Überwurfmutter mit gegenläufigem Gewinde sichert die Druckschraube. Durch diese Konstruktion ist es äußerst schwierig, reproduzierbar die Anpreßkräfte auf die Stopfbuchspackung einzustellen. Nur unter genauer Einhaltung der Drehmomente ist dies gewährleistet. Dies bedeutet einen mechanisch und fertigungstechnisch hohen Aufwand bei der Herstellung der Ventile. Besonders kritisch ist die Einstellung der Anpreßkräfte bei Pneumatikventilen mit im Steuerkopf fest eingestellter Federkraft zur Betätigung und Ventilsitzabdichtung. Werden durch zu hohe Anpreßkräfte die Stopfbuchspackungen zu stark angezogen, so geht ein Teil der Kraft des Pneumatikantriebs durch Reibung verloren. Die Ventilunterspindel wird mit unzureichende Kraft gegen den Ventilsitz gepreßt, wodurch die Dichtheit des Ventils herabgesetzt wird.

Ein Stopfbuchsventil wird beispielsweise in DE 25 50 811 C2 beschrieben. Die Stopfbuchsdichtung befindet sich hier nicht im Ventilgehäuse sondern in einem eingeschraubten Zylinderteil im oberen Bereich des Ventiles. Die Abdichtung durch Stopfbuchsringe ergibt sich, indem eine Überwurfmutter über abgeschrägte Druckringe die Stopfbuchsringe gegen die Oberspindel drückt.

Der Erfindung liegt die Aufgabe zugrunde, ein Stopfbuchsventil bereitzustellen, das die genannten Nachteile nicht aufweist.

Gelöst wurde die Aufgabe durch ein Ventil mit geteiltem Stopfbuchseneinsatz mit Toleranzpassung.

Der Stopfbuchseneinsatz besteht aus zwei oder mehreren Teilen. Die Teile des Stopfbuchseneinsatzes bilden einen zentralen Hohlraum zur Aufnahme der Stopfbuchspackung. Die Höhe der Stopfbuchspackung (ursprüngliches Teil vor einer Monatage, ohne Einwirkung von Kräften) ist so bemessen, daß die Stopfbuchsteile entlang der Spindelachse zusammengenommen eine geringere Höhe ergeben, d. h. daß die zusammengesetzten Stopfbuchsteile bei eingesetzter Stopfbuchspackung ohne äußere Krafteinwirkung etwas Spiel zueinander haben. Durch die vorgegebene Toleranz der Stopfbuchsteile entsteht mindest ein Spalt zwischen den Stopfbuchsteilen vor der endgültigen Montage (Toleranzpassung der Teile). In einem montierten Ventil werden die Stopfbuchsteile teilweise oder vollständig mit Hilfe eines Befestigungsmittels zusammengedrückt und die Stopfbuchspackung verspannt. Aufgrund der Toleranzpassung der Stopfbuchsteile wird somit eine definierte (maximale) Verspannung der Stopfbuchspackung erzielt. Die fertig montierten Stopfbuchsteile (z. B. bei angezogener Kopfschraube als Befestigungsmittel) üben gegenseitig die notwendigen Kräfte aufeinander aus, um die Stopfbuchsteile im Ventil zu fixieren. Besondere Sicherungsmaßnahmen wie zusätzliche Gewindebauteile (z. B. Konterschrauben) sind dadurch überflüssig.

Bei der Toleranzpassung sind die Stopfbuchsteile so dimensioniert, daß bei Zusammenfügen der Stopfbuchsteile und der Stopfbuchspackung (ohne Krafteinwirkung) eine Spaltbreite eines Spaltes oder mehrerer Spalte zusammen entsteht, um im montierten Zustand (bei angebrachtem Befestigungsmittel) für das Zustandekommen von ausreichend großen Kräften für eine Abdichtung von Ventilspindel/Stopfbuchspackung und Stopfbuchseneinsatz/Ventilkörper und von ausreichender Kraft (Gegenkraft) auf das Befestigungsmittel zur Sicherung. Bei vorgegebener Werkstoffwahl definiert die ursprüngliche Spaltbreite die maximal erhältlichen Kräfte, insbesondere die maximalen Anpreßkräfte zur Abdichtung der Ventilspindel. Der Stopfbuchseinsatz mit Stopfbuchsteilen und Stopfbuchspackung kann somit für eine Montage im Ventil mit geschlossenen Spalt (Ausführung A) und mit nicht geschlossenem Spalt (Ausführung B), vorzugsweise nahezu geschlossenem Spalt, ausgelegt sein. Ausführung A führt zu einem durch die Größe der Teile festgelegten Anpreßdruck auf die Ventilspindel und Sicherungsdruck auf das Befestigungsmittel nach der Montage. Bei einer Kopfschraube als Befestigungsmittel wird bei Ausführung A die Kopfschraube bis zum Anschlag (entspricht einem geschlossenen Spalt) festgezogen. Bei Ausführung B (teilweise zusammengedrückter Spalt nach Montage) wird das Befestigungsmittel definiert befestigt. Ein Nachstellen des Befestigungsmittel bis zu einem Maximalwert (geschlossener Spalt) ist dann möglich. Beispielsweise wird eine Kopfschraube bis zum Erreichen eines bestimmten Drehmomentes angezogen. Bei diesem Zustand sitzt die Kopfschraube fest und verdrehsicher im Ventil und die Anpreßkraft zur Abdichtung der Ventilspindel ist gegeben. Bei einem Verschleiß der Stopfbuchspackung kann die Kopfschraube nachgestellt werden. Das Nachstellen der Kopfschraube ist dann bis zu dem Maximalwert (definierte Grenzwert) möglich.

Die ursprüngliche Spaltbreite (Gesamtbreite der Spalte bei mehr als zwei Stopfbuchsteilen) liegt in der Regel im Bereich von 0,1 bis 0,5 mm, vorzugsweise 0,1 bis 0,3 mm, insbesondere 0,2 mm.

Die Stopfbuchsenteile sind gleichartig oder verschieden in der Form. Der Stopfbuchseneinsatz kann beispielsweise durch zwei gleichartige Halbschalen mit zylindrischem Innenhohlraum gebildet werden. Der Stopfbuchseneinsatz kann durch eine obere und untere Deckscheibe mit zentralen Öffnungen zur Durchführung der Spindel und einem oder mehreren Zwischenteilen (z. B. Hohlzylinderteile) mit einer zentralen Aussparung zur Aufnahme der Stopfbuchspackung gebildet werden. Der Stopfbuchseneinsatz kann auch aus einer Halbschale und einer Deckscheibe bestehen. Bevorzugt wird ein zweiteiliger Stopfbuchseneinsatz aus einem oberen und unteren Stopfbuchsenteil. Der Stopfbuchseneinsatz wird vorzugsweise von einer Aussparung im Ventilkörper aufgenommen. Der Stopfbuchseneinsatz wird im allgemeinen ohne Verschraubung in den Ventilkörper eingesetzt und durch ein Befestigungsmittel im Ventilkörper gehalten (fixiert). Das Befestigungsmittel ist beispielsweise eine Kopfschraube mit entsprechendem Gegengewinde im Ventilkörper. Eine Sicherungsschraube wie bei üblichen Stopfbuchsventilen wird nicht benötigt. Die Stopfbuchsenteile sind im allgemeinen aus Metall, z. B. Kupferlegierungen wie Messing oder Eisenlegierungen wie Stahl oder Edelstahl. Die Stopfbuchsenteile können auch aus Kunststoff sein, z. B. thermoplastische Kunststoffe, insbesondere technische Kunststoffe und Hochleistungskunststoffe. Es können auch Stopfbuchsenteile aus verschiedenen Materialien kombiniert werden, z. B. Teile aus Messing und Stahl (vorteilhaft bei korrosiven Medien wie fluorhaltigen Gasen) oder Metall und Kunststoff.

Die Stopfbuchspackung besteht aus einem oder mehreren Stopfbuchsringen. Ein Stopfbuchsring ist auch eine Hülse. Die Stopfbuchsringe bestehen in der Regel aus einem Kunststoff. Bevorzugte Kunststoffe sind Fluorpolymere, insbesondere Polytetrafluorethylen (PTFE). Andere geeignete Kunststoffe sind Kunststoffe mit guten Gleiteigenschaften, z. B. Polyethylen und insbesondere ultrahochmolekulares Polyethylen (PE-UHMW, z. B. ^{(R)}Hostalen GUR von Hoechst). Weitere einsetzbare Kunststoffe sind Polyvinylchlorid (PVC), Polyoxymethylen (POM) und Polyphenylensulfid (PPS).

Der Stopfbuchseneinsatz mit Stopfbuchspackung ist bei verschiedensten Ventiltypen einsetzbar.

Die Ventile gemäß der Erfindung werden bevorzugt als Gasventile eingesetzt, beispielsweise für technische Gase wie Stickstoff, Sauerstoff, Wasserstoff, Helium, Argon oder aggressive (korrosive) Gase wie fluorhaltige Gase.

Die Vorteile des Ventils gemäß der Erfindung:
· einfacher Aufbau mit wenigen Bauteilen,
· keine bauartbedingten Schwierigkeiten bei der Montage des Ventils,
· preiswerte Herstellbarkeit durch Verwendung von Teilen herkömmlicher Ventile (z. B. Umrüstung von Membranventilen),
· Reparaturfreundlichkeit (leichte Austauschbarkeit defekter Teile im Bereich der Stopfbuchse,
· Einsetzbarkeit und Kombinationsmöglichkeit verschiedenster Materialien im Stopfbuchsbereich, dadurch leichte Anpassung für die verschiedensten Verwendungen (z. B. Materialkombinationen gegen Korrosion), hohe Flexibiltät in der Materialwahl für Stopfbuchseneinsatz,
· sehr kompakte Bauweise möglich,
· geringe Herstellkosten,
· leichte Bearbeitung und Herstellung aufgrund geringer Bautiefe.

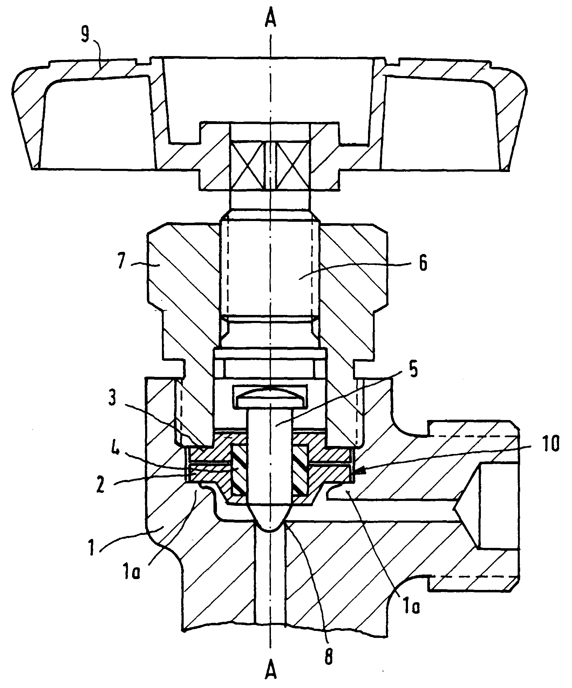

Die Erfindung wird anhand eines Beispiels in der Figur erläutert. Die Figur zeigt ein Schema des Ventils gemäß der Erfindung (Querschnitt entlang der Achse A-A). Das gezeigte Stopfbuchsventil hat bis auf den Stopfbuchseneinsatz den üblichen Aufbau aus Ventilkörper 1, Spindel aus Unterspindel 5 und Oberspindel 6, Kopfschraube 7 und Handrad 9. Daher können kommerziell erhältliche Ventile gemäß der Erfindung modifiziert werden. Der Stopfbuchseneinsatz besteht aus dem halbschaligen Stopfbuchsenoberteil 3 und dem Stopfbuchsenunterteil 2, durch die zentral die Unterspindel 5 geführt wird. Stopfbuchsenoberteil 3 und Stopfbuchsenunterteil 2 enthalten eine Aussparung zur Aufnahme der Stopfbuchspackung 4 (beispielsweise eine Hülse aus PTFE). Der Stopfbuchseneinsatz sitzt im Ventilkörper 1 Der Stopfbuchsenunterteil 2 sitzt auf den Backen 1a des Ventilkörpers 1 auf. Zwischen Stopfbuchsenunterteil 2 und Backen 1a des Ventilkörpers 1 befindet sich eine Dichtung 10 (nicht eingezeichnet) zur Abdichtung des Gasraumes gegen die Außenatmosphäre. Die Dichtung 10 ist vorzugsweise eine Winkelscheibe (an der unteren Außenkannte von Stopfbuchsenunterteil 2). Der Stopfbuchseneinsatz aus Stopfbuchsenoberteil 3 und Stopfbuchsenunterteil 2 mit Stopfbuchspackung 4 werden im Ventilkörper durch die Kopfschraube 7 (Befestigungsmittel für Stopfbuchseneinsatz) fixiert. Die Kopfschraube wird in den Ventilkörper gedreht bis vorzugsweise ein Drehmoment im Bereich von 100 bis 150 Nm, insbesondere 120 Nm, erreicht wird. Dadurch werden die Stopfbuchsenteile 2 und 3 gegeneinander gedrückt. Der Spalt zwischen Stopfbuchsenoberteil 3 und Stopfbuchsenunterteil 2 wird dadurch verringert oder geschlossen und die Stopfbuchspackung 4 gegen die Unterspindel 5 gepreßt. Eine Sicherungsschraube wie bei üblichen Stopfbuchsventilen ist nicht erforderlich.

Entsprechend dem gezeigten Beispiel in der Figur können übliche Ventilkörper (z. B. von Membranventilen) ohne großen Aufwand umgerüstet werden. Daher ist eine kostengünstige Herstellung des Ventils gemäß der Erfindung möglich.

### Bezugszeichenliste

- 1: Ventilkörper
- 1a: Ventilkörperbacken
- 2: unteres Stopfbuchsenteil
- 3: oberes Stopfbuchsenteil
- 4: Stopfbuchspackung
- 5: Unterspindel
- 6: Oberspindel
- 7: Kopfschraube (Befestigungsmittel)
- 8: Ventilsitz
- 9: Handrad
- 10: Dichtung

## Patentansprüche

1. Ventil mit geteiltem Stopfbuchseneinsatz mit Toleranzpassung.

2. Ventil nach Anspruch 1, dadurch gekennzeichnet, daß der Stopfbuchseneinsatz aus zwei oder mehreren Teilen besteht.

3. Ventil nach Anspruch 1, dadurch gekennzeichnet, daß der Stopfbuchseneinsatz aus halbschalenförmigem Stopfbuchsenoberteil (3) und Stopfbuchsenunterteil (2) besteht.

4. Ventil nach einem der Ansprüche 1 bis 3, dadurch gekennzeichnet, daß der Stopfbuchseneinsatz aus Stopfbuchsteilen (2,3) aus Metall oder Kunststoff besteht.

5. Ventil nach einem der Ansprüche 1 bis 4, dadurch gekennzeichnet, daß der Stopfbuchseneinsatz aus Stopfbuchsteilen (2, 3) verschiedener Materialien besteht.

6. Ventil nach einem der Ansprüche 1 bis 5, dadurch gekennzeichnet, daß die Stopfbuchspackung (4) aus einem oder mehren Kunststoffen besteht.

7. Ventil nach einem der Ansprüche 1 bis 6, dadurch gekennzeichnet, daß die Stopfbuchspackung (4) und Stopfbuchsteile (2, 3) durch ein Befestigungsmittel (7) verspannt sind.

8. Verwendung von geteilten Stopfbuchseneinsätzen mit Stopfbuchsteilen (2, 3) für die Herstellung von Ventilen.

9. Verwendung gemäß Anspruch 8, dadurch gekennzeichnet, daß die Stopfbuchseneinsätze austauschbar sind.
